# EUROPEAN PATENT APPLICATION

(11) **EP 4 435 627 A1**
(43) Date of publication of application: **25.09.2024**
(21) Application number: 24162875.9
(22) Date of filing: 12.03.2024
(51) Int. Cl.: G06F 16/55

(54) **INFORMATION PROCESSING SYSTEM, METHOD FOR PROCESSING INFORMATION, AND CARRIER MEDIUM**

(30) Priority: 23.03.2023 JP 2023047008
(71) Applicant: Ricoh Company, Ltd., Tokyo 143-8555 (JP)
(72) Inventor: AIBA, Akihito, Tokyo, 143-8555 (JP)
(74) Representative: SSM Sandmair

(57) **Abstract**

An information processing system includes a processing means (17; 47) for distinguishing, based on a predetermined priority criterion, a high-priority cluster having a high priority among multiple clusters into which multiple data are classified; a display control means (14; 44; 84) for displaying the high-priority cluster on a display; and an operation reception means (13; 43; 83) for receiving an instruction operation for adding, to the high-priority cluster, distinguishing information for distinguishing the high-priority cluster from a rest of the multiple clusters. The processing means (17; 47) is configured to add the distinguishing information to the high-priority cluster.

## Description

### BACKGROUND

### Technical Field

Embodiments of the present disclosure relate to an information processing system, a method for processing information, and a carrier medium.

### Related Art

Japanese Unexamined Patent Application Publication No. 2013-161295 describes a label addition device that classifies image data into clusters, displays the classified image data on a display means, and adds a label received from an operator to the image data.

In the related art, it has been difficult for a user to check which cluster is to be labeled from among multiple clusters.

### SUMMARY

In one aspect, an information processing system includes a processing means for distinguishing, based on a predetermined priority criterion, a high-priority cluster having a high priority among multiple clusters into which multiple data are classified; a display control means for displaying the high-priority cluster on a display; and an operation reception means for receiving an instruction operation for adding, to the high-priority cluster, distinguishing information for distinguishing the high-priority cluster from a rest of the multiple clusters. The processing means is configured to add the distinguishing information to the high-priority cluster.

Another aspect concerns a method for processing information by an information processing apparatus. The method includes distinguishing, based on a predetermined priority criterion, a high-priority cluster having a high priority among multiple clusters into which multiple data are classified; displaying the high-priority cluster on a display; receiving an instruction operation for adding, to the high-priority cluster, distinguishing information for distinguishing the high-priority cluster from a rest of the multiple clusters; and adding the distinguishing information to the high-priority cluster.

In another aspect, a carrier medium carrying computer readable codes which, when executed by a computer system, cause the computer system to carry out the method described above.

According to aspects of the present disclosure, distinguishing information can be efficiently added to a high-priority cluster.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an overall configuration of a management system according to an embodiment of the present disclosure;
FIG. 2 is a block diagram illustrating hardware configurations of a diagnostic apparatus and a management processor according to an embodiment of the present disclosure;
FIG. 3 is a block diagram illustrating a hardware configuration of a machine according to an embodiment of the present disclosure;
FIG. 4 is a block diagram illustrating a functional configuration of the management system illustrated in FIG. 1;
FIG. 5A, 5B, and 5C are conceptual diagrams of a vibration data management table, a cluster management table, and a learning-data management table according to an embodiment of the present disclosure, respectively;
FIG. 6 is a sequence diagram of an operation performed by the management system illustrated in FIG. 4;
FIG. 7 is a flowchart of an operation performed by the diagnostic apparatus of the management system illustrated in FIG. 4;
FIGS. 8A and 8B are diagrams each illustrating a spectrogram of detected information according to an embodiment of the present disclosure;
FIG. 9 is a diagram illustrating a display screen of the management processor of the management system illustrated in FIG. 4;
FIG. 10 is another diagram illustrating a display screen of the management processor of the management system illustrated in FIG. 4;
FIG. 11 is a sequence diagram of an operation according to a modification of an embodiment of the present disclosure;
FIG. 12 is a diagram illustrating an overall configuration of a management system according to a modification of an embodiment of the present disclosure; and
FIGS. 13A to 13D are diagrams each illustrating a captured image obtained by the management system illustrated in FIG. 12.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result falling within the scope of the appended claims.

Referring now to the drawings, embodiments of the present disclosure are described below. As used herein, the singular forms "a," "an," and "the" are intended to include the plural forms as well, unless the context clearly indicates otherwise.

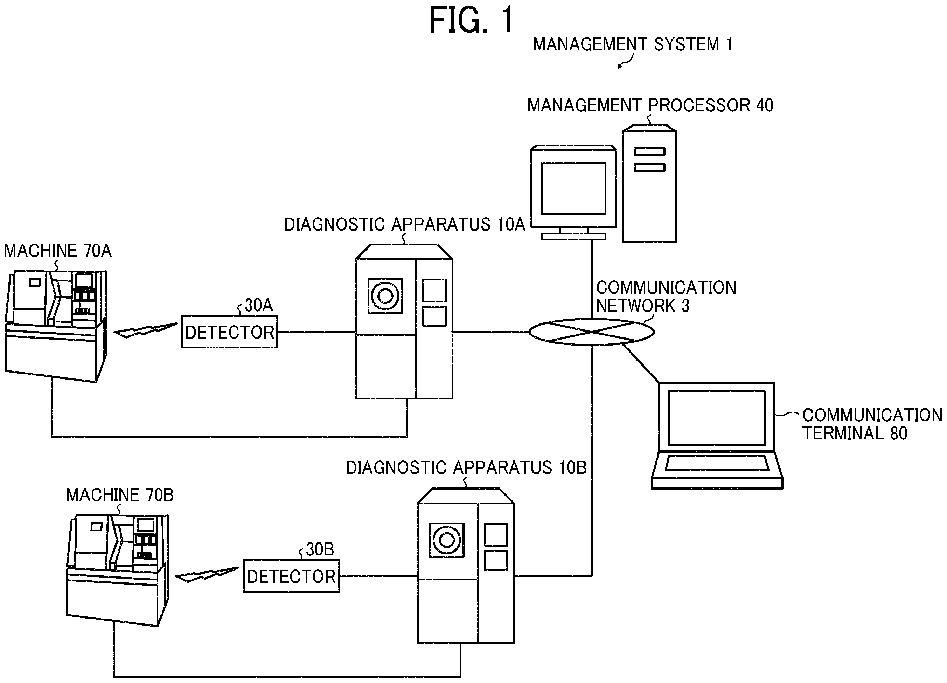

FIG. 1 is a schematic diagram illustrating an overview of a management system 1 as an information processing system according to an embodiment of the present disclosure. The management system 1 according to the present embodiment includes a machine 70A, a diagnostic apparatus 10A including a detector 30A, a machine 70B, a diagnostic apparatus 10B including a detector 30B, a management processor 40, and a communication terminal 80.

The diagnostic apparatuses 10A and 10B and the management processor 40 are each an example of an information processing apparatus.

The diagnostic apparatuses 10A and 10B and the communication terminal 80 may be installed in the same factory as the machines 70A and 70B or may be installed in a remote place. The same applies to the management processor 40. Each of the diagnostic apparatuses 10A and 10B, the management processor 40, and the communication terminal 80 may be implemented by a single computer, multiple computers, or a general-purpose personal computer (PC) in which a dedicated software program is installed.

The diagnostic apparatuses 10A and 10B, the management processor 40, and the communication terminal 80 communicate with one another via a communication network 3. The communication network 3 is implemented by, for example, the Internet, a mobile communication network, or a local area network (LAN). The communication network 3 may include, in addition to wired communication networks, wireless communication networks in compliance with, for example, 5th generation (5G), Worldwide Interoperability for Microwave Access (WiMAX), or Long-Term Evolution (LTE).

The machines 70A and 70B are machine tools that use tools to perform machining (processing) such as cutting, grinding, or polishing on a subject of machining (workpiece). The machines 70A and 70B are examples of the subject to be diagnosed by the diagnostic apparatuses 10A and 10B, respectively. The machines 70A and 70B may be collectively referred to as the "machines 70," and the diagnostic apparatuses 10A and 10B may be collectively referred to as the "diagnostic apparatuses 10" in the following description. The subject to be diagnosed is not limited to the machines 70 and may be, for example, an assembling machine, a measuring machine, an inspection machine, or a cleaning machine.

The diagnostic apparatus 10A and the machine 70A, or the diagnostic apparatus 10B and the machine 70B, may be connected in any connection form. For example, the diagnostic apparatus 10A and the machine 70A, or the diagnostic apparatus 10B and the machine 70B, is connected by a dedicated connection line, a wired network such as a wired local area network (LAN), or a wireless network.

The detectors 30A and 30B (may be collectively referred to as the "detectors 30" in the following description) detect physical quantities and output signals representing information on the detected physical quantities as detected information (sensor data) to the diagnostic apparatuses 10A and 10B, respectively. The physical quantity detected is, for example, the vibration or sound generated by the contact between the tool installed in the machine 70A or 70B and the subject of machining during the machining operation, or, for example, the vibration or sound generated by the tool or the machine 70A or 70B itself.

Examples of the detectors 30 include microphones, vibration sensors, accelerometers, and acoustic emission (AE) sensors to detect a change in a physical quantity such as vibration or sound. Such a detector (detection means) is disposed, for example, in the vicinity of the tool, such as a drill, an end mill, a cutting tool tip, or a grindstone, which generates mechanical vibration. For example, the detector is fixed by a screw, a magnet, or an adhesive. Alternatively, the detector 30 is embedded in the subject to be diagnosed, by, for example, hole-making processing.

The detector 30A does not have to be fixed to the machine 70A but may be disposed in the vicinity of the machine 70A to detect a change in a physical quantity such as the vibration or sound generated by the machine 70A. The same applies to the detector 30B.

The detectors 30A and 30B may be respectively incorporated in advance in the machines 70A and 70B or may be attached to the machines 70A and 70B being finished products.

The numbers of detectors 30A and 30B may be any number. Further, the multiple detectors 30 may be of the same type to detect the same type of physical quantity, or of different types to detect different types of physical quantities.

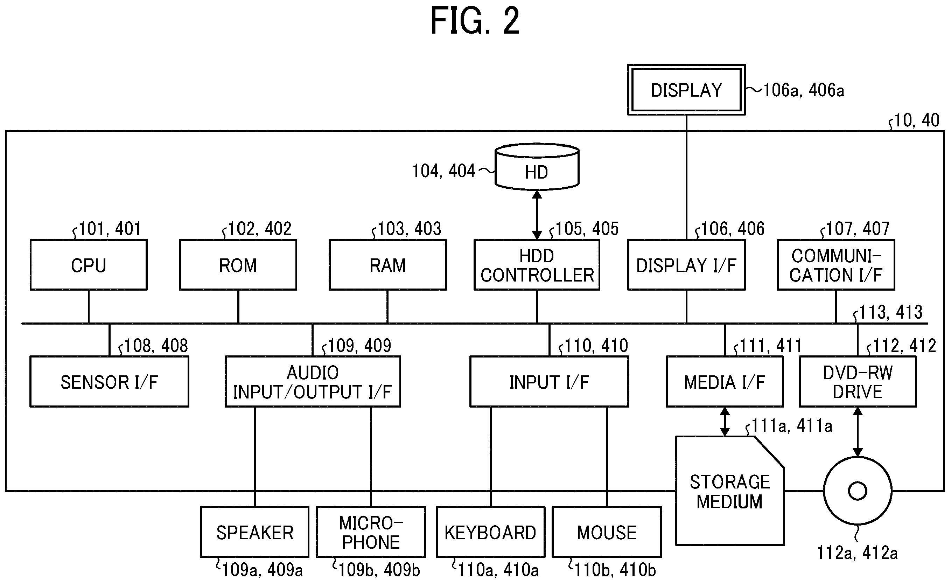

FIG. 2 is a block diagram illustrating a hardware configuration of the diagnostic apparatus and the management processor according to the present embodiment. The diagnostic apparatuses 10A and 10B have a similar hardware configuration which is described below as the hardware configuration of the diagnostic apparatus 10. Hardware elements thereof are each indicated with a reference sign including a numeral from 100 to 199. Hardware elements of the management processor 40 are each indicated with a reference sign including a numeral from 400 to 499. The communication terminal 80 also has the same hardware configuration as the diagnostic apparatus 10, and the reference signs and the description of the hardware configuration thereof are omitted.

The hardware elements of the diagnostic apparatus 10 will be described below. Since the hardware elements of the management processor 40 are the same as those of the diagnostic apparatus 10, the description thereof will be omitted.

The diagnostic apparatus 10 is implemented by a computer and, as illustrated in FIG. 2, includes a central processing unit (CPU) 101, a read-only memory (ROM) 102, a random-access memory (RAM) 103, a hard disk (HD) 104, a hard disk drive (HDD) controller 105, a display interface (I/F) 106, and a communication I/F 107.

The CPU 101 controls the entire operation of the diagnostic apparatus 10. The ROM 102 stores a program for controlling the CPU 101 such as an initial program loader (IPL) to boot the CPU 101. The RAM 103 is used as a work area for the CPU 101.

The HD 104 stores various data such as a control program. The HDD controller 105 controls the reading or writing of various data from or to the HD 104 under the control of the CPU 101. The display I/F 106 is a circuit to control a display 106a to display an image. The display 106a is, for example, a liquid crystal display or an organic electro-luminescence (EL) display that displays various types of information such as a cursor, a menu, a window, characters, and an image. The communication I/F 107 is an interface used for communication with other devices (external devices) such as the machine 70.

The communication I/F 107 is, for example, a network interface card (NIC) in compliance with transmission control protocol/internet protocol (TCP/IP).

The diagnostic apparatus 10 further includes a sensor I/F 108, an audio input/output I/F 109, an input I/F 110, a media I/F 111, and a digital versatile disk (DVD)-ReWritable (RW) drive 112.

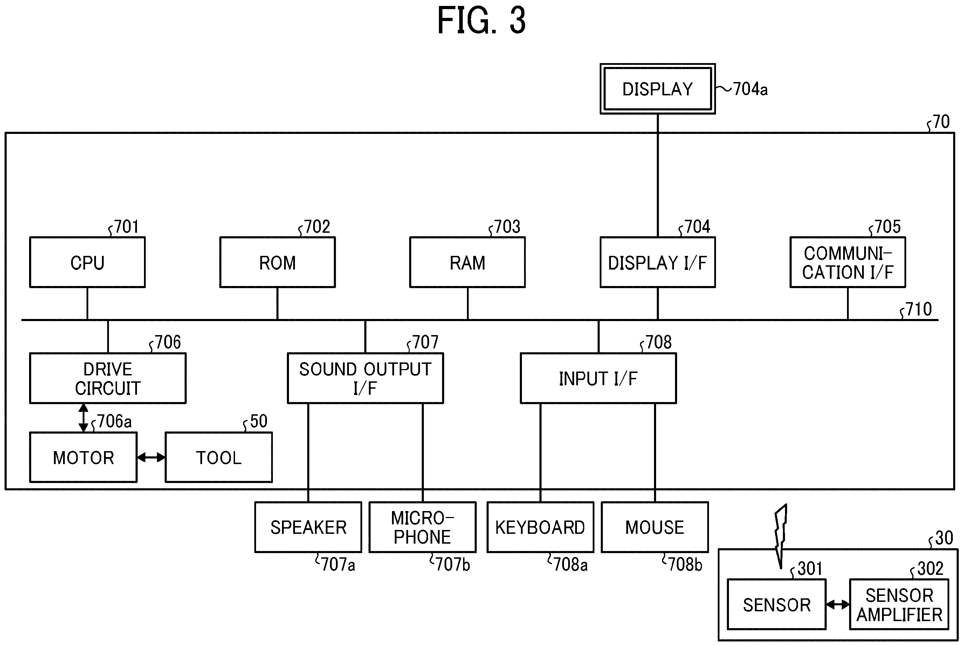

The sensor I/F 108 is an interface that receives detected information via a sensor amplifier 302 (illustrated in FIG. 3) included in the detector 30. The audio input/output I/F 109 is a circuit that processes the input of sound signals from a microphone 109b and the output of sound signals to a speaker 109a under the control of the CPU 101. The input I/F 110 is an interface for connecting an input device (input means) to the diagnostic apparatus 10.

One example of the input device is a keyboard 110a that includes multiple keys for inputting, for example, characters, numerals, and various instructions. Another example of the input device is a mouse 110b for, for example, selecting or executing various types of instructions, selecting a subject to be processed, and moving a cursor.

The media I/F 111 controls the reading or writing (storing) of data from or to a storage medium 111a such as a flash memory.

The DVD-RW drive 112 controls the reading or writing of various data from or to a DVD-RW 112a as an example of a removable recording medium. The removable storage medium is not limited to a DVD-RW and may be, for example, a DVD-recordable (DVD-R). Further, the DVD-RW drive 112 may be a BLU-RAY drive to control the reading or writing of various data from or to a BLU-RAY disc.

Further, the diagnostic apparatus 10 includes a bus line 113. Examples of the bus line 113 include an address bus and a data bus. The bus line 113 electrically connects the elements, such as the CPU 101, with one another.

The above-mentioned programs may be stored in a recording medium, such as a hard disk (HD) and a compact disc read-only memory (CD-ROM), to be distributed domestically or internationally as a program product. The diagnostic apparatus 10 executes, for example, a program according to an embodiment of the present disclosure, to implement an output control method according to an embodiment of the present disclosure.

FIG. 3 is a block diagram illustrating a hardware configuration of the machine according to the present embodiment. The machines 70A and 70B have a similar hardware configuration which is described below as the hardware configuration of the machine 70.

The machine 70 includes a CPU 701, a ROM 702, a RAM 703, a display I/F 704, a communication I/F 705, a drive circuit 706, a sound output I/F 707, an input I/F 708, and a sensor I/F 709.

The CPU 701 controls the entire operation of the machine 70. The ROM 702 stores a control program to boot the CPU 701 such as an IPL. The RAM 703 is used as a work area for the CPU 701. The display I/F 704 is a circuit to control a display 704a to display an image. The display 704a is, for example, a liquid crystal display or an organic EL display that displays various types of information such as a cursor, a menu, a window, characters, and an image.

The communication I/F 705 is an interface for communication with an external device such as the diagnostic apparatus 10. The communication I/F 705 is, for example, an NIC in compliance with TCP/IP.

The drive circuit 706 is a circuit that controls the drive of a motor 706a. The motor 706a drives a tool 50 used for machining. The tool 50 is, for example, a drill, an end mill, a cutting tool tip, or a grindstone. Examples of the tool 50 further include a table that supports the subject to be processed and moves corresponding to the machining. The tool 50 is an example of the subject and an example of a machining portion.

The sound output I/F 707 is a circuit that processes the input of sound signals from a microphone 707b and the output of sound signals to a speaker 707a under the control of the CPU 701. The input I/F 708 is an interface for connecting an input device to the machine 70. One example of the input device is a keyboard 708a that includes multiple keys for inputting, for example, characters, numerals, and various instructions. Another example of the input device is a mouse 708b for, for example, selecting or executing various types of instructions, selecting a subject to be processed, and moving a cursor.

The machine 70 further includes a bus line 710. Examples of the bus line 710 include an address bus and a data bus. The bus line 710 electrically connects the elements such as the CPU 701 with one another.

The detector 30, which detects the physical quantity (such as vibration or sound) output from the machine 70, includes a sensor 301 and the sensor amplifier 302. As described above, the sensor 301 detects the physical quantity such as the vibration or sound generated by the contact between the tool 50 of the machine 70 and the subject to be processed during the processing, or the physical quantity such as the vibration or sound generated by the tool 50 or the machine 70 itself. The sensor 301 obtains detected information (sensor data) based on the detected physical quantity information. The sensor 301 is, for example, a microphone, a vibration sensor, an accelerometer, or an AE sensor. The sensor amplifier 302 adjusts, for example, the detection sensitivity of the sensor 301 and outputs the detected information acquired by the sensor 301. The detector 30 is an example of a measurement device and acquires detected information of vibration which is an example of measurement data acquired by the measurement device.

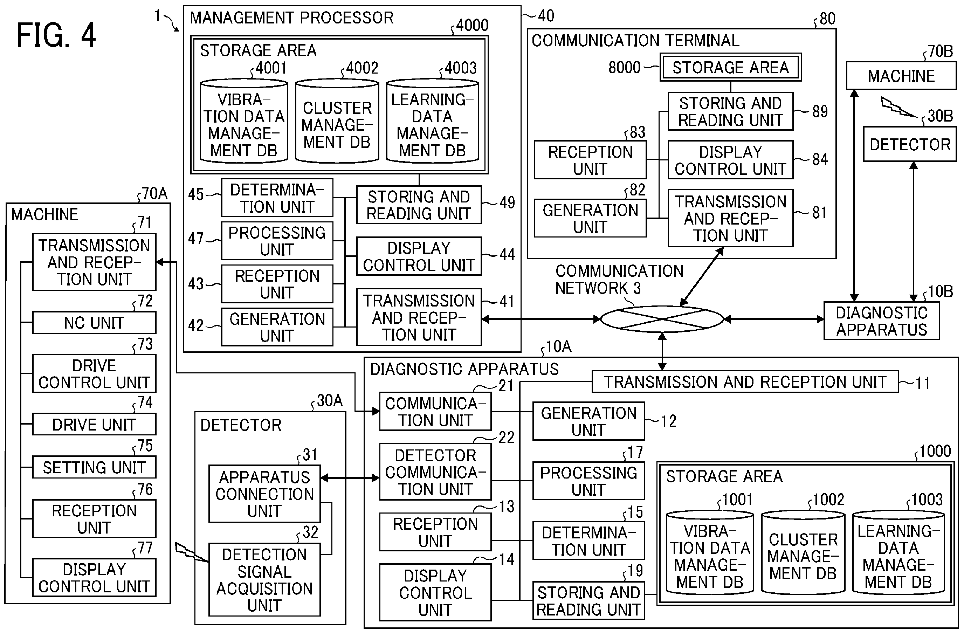

FIG. 4 is a block diagram illustrating a functional configuration of the management system according to the present embodiment. The diagnostic apparatus 10B and the machine 70B are similar in functional configuration to the diagnostic apparatus 10A and the machine 70A, respectively. In the description below, redundant descriptions are omitted. The functions implemented by the detector 30A include an apparatus connection unit 31 and a detection signal acquisition unit 32 (a data acquisition means). The detector 30B is similar in functional configuration to the detector 30A. The apparatus connection unit 31 transmits, to the diagnostic apparatus 10, the detection signals (detected information) acquired by the detection signal acquisition unit 32. The apparatus connection unit 31 is implemented by, for example, the sensor amplifier 302 illustrated in FIG. 3. The detection signal acquisition unit 32 detects the physical quantity (such as vibration or sound) that changes with the operation of the machine 70 (e.g., the tool 50), and acquires the information on the physical quantity as the detected information. The detection signal acquisition unit 32 is implemented by, for example, the sensor 301 illustrated in FIG. 3.

### Functional Configuration of Diagnostic Apparatus

The diagnostic apparatus 10 includes a transmission and reception unit 11, a generation unit 12, a reception unit 13, a display control unit 14, a determination unit 15, a processing unit 17, a storing and reading unit 19, a communication unit 21, and a detector communication unit 22.

These are units of functions implemented by or means caused to function by one or more of the elements illustrated in FIG. 2 operating in accordance with instructions of the CPU 101 according to the control program loaded from the HD 104 to the RAM 103.

The diagnostic apparatus 10 further includes a storage area 1000 implemented by the RAM 103 and the HD 104 illustrated in FIG. 2. The storage area 1000 is an example of a memory (storage means).

The transmission and reception unit 11 has the function of transmitting and receiving various data (or information) to and from an external device such as the management processor 40 via the communication network 3. The transmission and reception unit 11 is implemented by, for example, the communication I/F 107 and the CPU 101 executing a program, illustrated in FIG. 2. The transmission and reception unit 11 is an example of a transmission means and an example of a reception means.

The communication unit 21 has the function of transmitting and receiving various data (or information) to and from the machine 70. The communication unit 21 receives, for example, control signals for starting and ending driving of the tool 50 from the machine 70. The communication unit 21 is implemented by, for example, the communication I/F 107 and the CPU 101 executing a program, illustrated in FIG. 2.

The detector communication unit 22 has the function of performing data communication with the detector 30. The detector communication unit 22 receives, for example, detected information (sensor data) obtained by the detector 30. The detector communication unit 22 is implemented by, for example, the CPU 101 executing a program, illustrated in FIG. 2.

The generation unit 12 has the function of generating various image data to be displayed on the display 106a. The generation unit 16 is implemented by, for example, the CPU 101 executing a program, illustrated in FIG. 2.

The reception unit 13 has the function of receiving input from a user via an input means such as the keyboard 110a illustrated in FIG. 2. The reception unit 13 is an example of an operation reception means. The reception unit 13 is implemented by, for example, the CPU 101 executing a program, illustrated in FIG. 2.

The display control unit 14 has the function of controlling the display 106a illustrated in FIG. 2 to display various screens. The display control unit 14 controls the display 106a to display a screen related to the image data generated in, for example, Hypertext Markup Language (HTML) using, for example, a Web browser. The display control unit 14 is implemented by, for example, the display I/F 106 and the CPU 101 executing a program, illustrated in FIG. 2.

The determination unit 15 is implemented by, for example, the operation of the CPU 101 illustrated in FIG. 2 and has the function of performing various kinds of determination. The determination unit 15 is an example of a determination means.

The processing unit 17 has the function of signal processing the detected information (detection signals) received by the detector communication unit 22 and various types of data processing. A detailed description of the processing unit 17 is deferred. The processing unit 17 is implemented by, for example, the CPU 101 executing a program, illustrated in FIG. 2.

The storing and reading unit 19 has the function of storing various data in the storage area 1000 and reading various data from the storage area 1000. The storing and reading unit 19 is implemented by, for example, the CPU 101 executing a program, illustrated in FIG. 2.

The storage area 1000 is implemented by, for example, the ROM 102, the HD 104, and the storage medium 111a illustrated in FIG. 2. The storage area 1000 includes a vibration data management database (DB) 1001 (an example of a vibration data management means), a cluster management DB 1002 (an example of a cluster management means), and a learning-data management DB 1003 (an example of a learning-data management means). The vibration data management DB 1001 is in the form of a vibration data management table described later. The cluster management DB 1002 is in the form of a cluster management table described later. The learning-data management DB 1003 is in the form of a learning-data management table described later. The storage area 1000 is an example of a memory (storage means).

### Functional Configuration of Management Processor

The management processor 40 includes a transmission and reception unit 41, a generation unit 42, a reception unit 43, a display control unit 44, a determination unit 45, a processing unit 47, and a storing and reading unit 49. These are units of functions that are implemented by or means caused to function by one or more of the elements illustrated in FIG. 2 operating in accordance with instructions from the CPU 401 according to the program loaded from the HD 404 to the RAM 403.

The management processor 40 includes a storage area 4000 implemented by the RAM 403 and the HD 404 in FIG. 2. The storage area 4000 is an example of a memory (storage means).

The transmission and reception unit 41 has the function of transmitting and receiving various data (or information) to and from an external device such as the diagnostic apparatus 10 via the communication network 3. The transmission and reception unit 41 is implemented by, for example, the communication I/F 407 and the CPU 401 executing a program, illustrated in FIG. 2. The transmission and reception unit 41 is an example of the transmission means and an example of the reception means.

The generation unit 42 has the function of generating various image data to be displayed on a display 406a. The generation unit 42 is implemented by, for example, the CPU 401 executing a program, illustrated in FIG. 2.

The reception unit 43 has the function of receiving user input via an input means such as a keyboard 410a illustrated in FIG. 2. The reception unit 43 is another example of the operation reception means. The reception unit 43 is implemented by, for example, the CPU 401 executing a program, illustrated in FIG. 2.

The display control unit 44 has the function of controlling the display 406a illustrated in FIG. 2 to display various screens. The display control unit 44 controls the display 406a to display a screen related to image data generated in, for example, HTML using, for example, a Web browser. The display control unit 44 is implemented by, for example, the display I/F 406 and the CPU 401 executing a program, illustrated in FIG. 2.

The determination unit 45 is implemented by, for example, the operation of the CPU 401 illustrated in FIG. 2 and has the function of performing various kinds of determination. The determination unit 45 is an example of the determination means.

The processing unit 47 has the function of performing various types of data processing. A detailed description of the processing unit 47 is deferred. The processing unit 47 is implemented by, for example, the CPU 401 executing a program, illustrated in FIG. 2.

The storing and reading unit 49 has the function of storing various data in the storage area 4000 and reading various data from the storage area 4000. The storing and reading unit 49 is implemented by, for example, the CPU 401 executing a program, illustrated in FIG. 2.

The storage area 4000 is implemented by, for example, the ROM 402, the HD 404, and a storage medium 411a illustrated in FIG. 2. The storage area 4000 includes a vibration data management DB 4001 (an example of the vibration data management means), a cluster management DB 4002 (an example of the cluster management means), and a learning-data management DB 4003 (an example of the learning-data management means).

### Functional Configuration of Machine

The machine 70 includes a transmission and reception unit 71 (a transmission means), a numerical control (NC) unit 72, a drive control unit 73, a drive unit 74, a setting unit 75, a reception unit 76, a display control unit 77, and a sound control unit.

The transmission and reception unit 71 has the function of transmitting and receiving various data (or information) to and from other devices such as the diagnostic apparatus 10. The transmission and reception unit 71 transmits to the diagnostic apparatus 10, for example, the control signals for starting and ending driving of the tool 50 of the machine 70. The transmission and reception unit 71 is implemented by, for example, the communication I/F 705 and the CPU 701 executing a program, illustrated in FIG. 3.

The NC unit 72 has the function of performing the numerical control of the machining by the drive control unit 73.

For example, the NC unit 72 generates and outputs numerical control data for controlling the operation of the drive unit 74. The NC unit 72 outputs, to the transmission and reception unit 71, for example, the control signals for starting and ending the driving of the tool 50, received from the machine 70.

For example, in machining on the subject to be processed, the NC unit 72 changes the type of the drive unit 74 to be driven or the drive setting (e.g., rotation speed or revolutions per minute) of the drive unit 74 in accordance with the machining process. Each time the type of operation is changed, the NC unit 72 sequentially transmits the context information corresponding to the changed type of operation to the diagnostic apparatus 10 via the transmission and reception unit 71. The NC unit 72 is implemented by, for example, the CPU 701 executing a program, illustrated in FIG. 3.

The drive control unit 73 has the function of controlling the driving of the drive unit 74 based on the numerical control data obtained by the NC unit 72. The drive control unit 73 is implemented by, for example, the drive circuit 706 illustrated in FIG. 3. The drive control unit 73 is implemented by, for example, the drive circuit 706 and the CPU 701 executing a program, illustrated in FIG. 3.

The drive unit 74 has a drive function to be controlled by the drive control unit 73. The drive unit 74 drives the tool under the control of the drive control unit 73, for example. The drive unit 74 is, for example, an actuator that is controlled by the drive control unit 73 and is implemented by, for example, the motor 706a illustrated in FIG. 3. The drive unit 74 may be any actuator used for machining and is subject to numerical control. Further, two or more drive units 74 may be included.

The setting unit 75 has the function of setting condition information corresponding to the current operation of the machine 70. The setting unit 75 is implemented by, for example, the CPU 701 executing a program, illustrated in FIG. 3.

The reception unit 76 has the function of receiving user input via an input means such as the keyboard 708a illustrated in FIG. 3. The reception unit 76 receives, for example, the selection of output items in response to an input to a screen displayed on the display 704a. The reception unit 76 is implemented by, for example, the input I/F 708 illustrated in FIG. 3 and the execution of a program by the CPU 701 illustrated in FIG. 3.

The display control unit 77 has the function of displaying various screen information on the display 704a illustrated in FIG. 3. The display control unit 77 controls, for example, the display 704a to display a screen. The display control unit 77 is implemented by, for example, the display I/F 704 illustrated in FIG. 3 and the CPU 701 executing a program, illustrated in FIG. 3.

The sound control unit is implemented by instructions from the CPU 701 illustrated in FIG. 3 and controls the speaker 707a illustrated in FIG. 3 to output a sound signal. The sound control unit is implemented by, for example, the sound output I/F 707 and the CPU 701 executing a program, illustrated in FIG. 3.

### Functional Configuration of Communication Terminal

The communication terminal 80 includes a transmission and reception unit 81, a generation unit 82, a reception unit 83, a display control unit 84, and a storing and reading unit 89. These are units of the functions implemented by or means caused to function by one or more of the components similar to those illustrated in FIG. 2 operating according to the instructions from the CPU according to the program loaded from the HD to the RAM.

The communication terminal 80 includes a storage area 8000 implemented by the RAM and the HD similar to those illustrated in FIG. 2. The storage area 8000 is an example of a memory (storage means).

The transmission and reception unit 81 has the function of transmitting and receiving various types of data (or information) to and from an external device such as the management processor 40 via the communication network 3. The transmission and reception unit 81 is implemented by, for example, the communication I/F similar to that illustrated in FIG. 2 and the CPU similar to that illustrated in FIG. 2, executing a program. The transmission and reception unit 81 is an example of a transmission means and an example of a reception means.

The generation unit 82 has the function of generating various image data to be displayed on a display. The generation unit 82 is implemented by, for example, the executing of a program by the CPU similar to that illustrated in FIG. 2.

The reception unit 83 has the function of receiving user input via the input device such as the keyboard similar to that illustrated in FIG. 2. The reception unit 83 is another example of the operation reception means. The reception unit 83 is implemented by, for example, the executing of a program by the CPU similar to that illustrated in FIG. 2.

The display control unit 84 has the function of controlling the display similar to that illustrated in FIG. 2 to display various screens. The display control unit 84 controls the display to display a screen related to image data generated in, for example, HTML using, for example, a Web browser. The display control unit 84 is implemented by, for example, the display I/F similar to that illustrated in FIG. 2 and the CPU similar to that illustrated in FIG. 2, executing a program.

The storing and reading unit 89 has the function of storing various data in the storage area 8000 and reading the various data from the storage area 8000. The storing and reading unit 89 is implemented by, for example, the executing of a program by the CPU similar to that illustrated in FIG. 2. The storage area 8000 is implemented by, for example, the ROM, the HD, and the storage medium similar to those illustrated in FIG. 2.

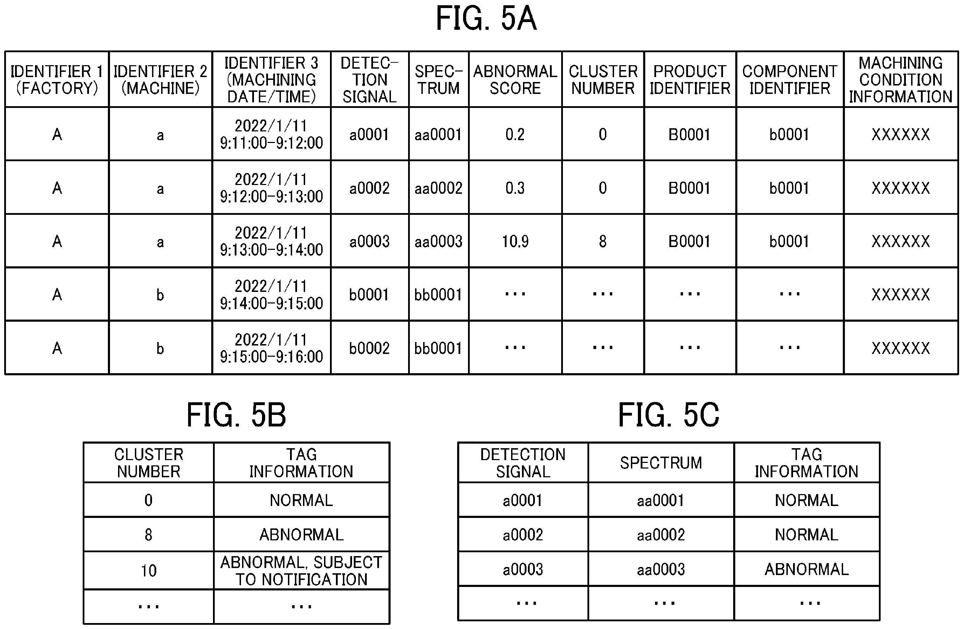

FIGS. 5A, 5B, and 5C are respectively a conceptual diagram of a vibration data management table, a conceptual diagram of a cluster management table, and a conceptual diagram of a learning-data management table according to the present embodiment.

The vibration data management table is a table for managing vibration data. The storage area 1000 stores the vibration data management DB 1001 in the form of the vibration data management table as illustrated in FIG. 5A. Further, the storage area 4000 stores the vibration data management DB 4001 in the form of the vibration data management table as illustrated in FIG. 5A.

In the vibration data management table, as vibration data, identifiers 1 to 3, a detection signal (detected information) of the vibration acquired from the detector 30, a spectrum (frequency information) indicating the frequency of vibration, an abnormality score, a cluster number, a product identifier, a component identifier, and machining condition information are stored in association with one another.

Each of the identifiers 1 to 3 is information included in signal identification information identifying the detected information. The identifier 1 (factory) is an example of factory identification information identifying the factory in which machining work is performed. The identifier 2 (machine) is an example of machine identification information identifying the machine that has performed the machining. The identifier 3 (machining date and time) is an example of time information identifying the date and time at which the machining has been performed.

The abnormality score is an example of likelihood information indicating the likelihood of abnormality of a subject determined based on the measurement data.

The cluster number is a serial number assigned to each of the clusters into which multiple data are classified.

The product identifier is the information identifying a product including the workpiece as a component. The component identifier is the information identifying a component using the workpiece.

The machining condition information includes, for example, machining program information indicating how many cycles a predetermined sequence is performed, sequence information identifying each of multiple machining operations performed on a workpiece, tool type information, tool moving speed, and spindle rotation speed (revolutions per minute).

The cluster management table is a table for managing the clusters. The storage area 1000 includes the cluster management DB 1002 in the form of the cluster management table illustrated in FIG. 5B. Similarly, the storage area 4000 includes the cluster management DB 4002 in the form of the cluster management table illustrated in FIG. 5B.

In the cluster management table, cluster numbers and tag information are stored in association with one another. The tag information is an example of distinguishing information for distinguishing a high-priority cluster from other clusters.

The learning-data management table is a table for managing learning data for generating a learned model. The storage area 1000 stores the learning-data management DB 1003 in the form of the learning-data management table as illustrated in FIG. 5C. Similarly, the storage area 4000 stores the learning-data management DB 4003 in the form of the learning-data management table as illustrated in FIG. 5C.

In the learning-data management table, as learning data, a detection signal, a spectrum, and the tag information indicating normal or abnormal are stored in association with one another.

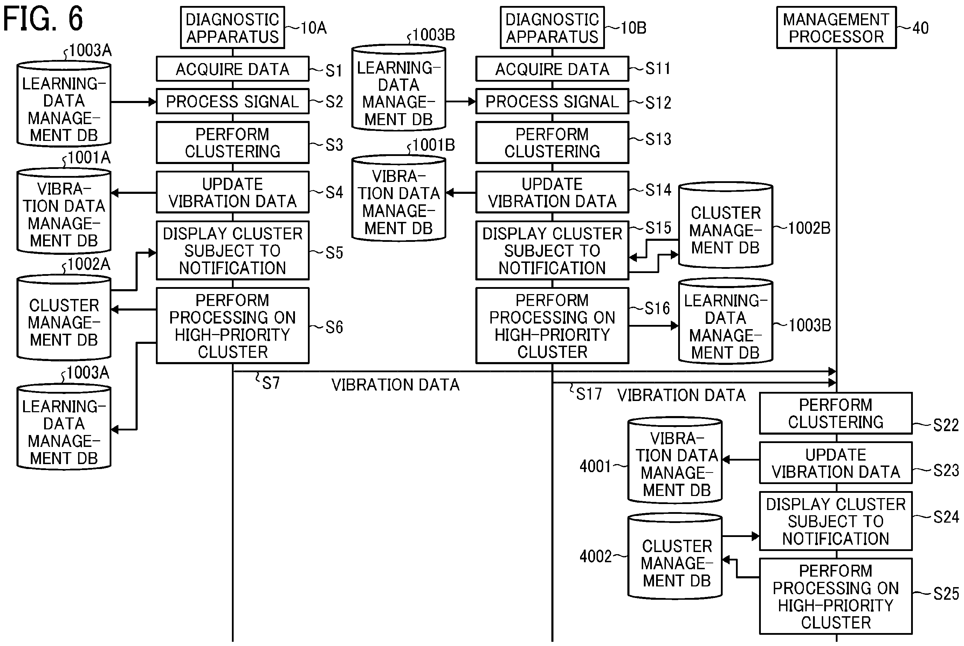

FIG. 6 is a sequence diagram of an operation according to the present embodiment.

The communication unit 21 of the diagnostic apparatus 10A acquires the control signals for starting and ending the driving of the tool 50 from the machine 70A. The detector communication unit 22 acquires multiple detected information of the vibration from the detector 30A in synchronization with the acquisition of the control signals (step S1).

The processing unit 17 extracts the spectra of the vibration waveforms from the detected information (detection signals), and calculates the abnormality score based on the detected information using the learned model generated based on the learning data stored in the learning-data management DB 1003. Thus, the detected signals are processed (step S2). The abnormality score is an example of the likelihood information indicating the likelihood of abnormality of the tool 50 or the operation of the tool 50 determined based on the detected information.

The processing unit 17 performs the clustering of the multiple detected information acquired in step S1. Specifically, the processing unit 17 classifies the detected information into multiple clusters and assigns their cluster numbers to the clusters (step S3). When the detected information acquired in step S1 is classified into an already-present cluster, the processing unit 17 assigns the cluster number of that cluster to the detected information.

The storing and reading unit 19 stores, for each detected information acquired in step S1, the spectrum extracted in step S2, the abnormality score calculated in step S2, and the cluster number assigned in step S3 in association with the detected information in the vibration data management DB 1001, to update the vibration data (step S4).

The processing unit 17 causes the storing and reading unit 19 to search the cluster management DB 1002 using the cluster number assigned in step S3 as a search key, to identify the cluster associated with the tag information containing "subject to notification." The display control unit 14 displays, on the display 106a, various kinds of information of the cluster identified as being subject to notification (step S5).

When instructed to rearrange the clusters classified in step S3 according to a predetermined priority criterion and to add tag information to the high-priority cluster, the processing unit 17 causes the storing and reading unit 19 to store the cluster number of the high-priority cluster and the tag information in association with one another in the cluster management DB 1002. The processing unit 17 performs, on the high-priority cluster, processing different from the processing for other clusters (step S6). The priority used in step S6 is determined based on, for example, the abnormality score. In other words, the priority criterion relates to, for example, the abnormality score.

The transmission and reception unit 11 transmits the vibration data including the detected information acquired in step S1 to the management processor 40. The transmission and reception unit 41 of the management processor 40 receives the vibration data transmitted by the transmission and reception unit 11 (step S7).

The communication unit 21 of the diagnostic apparatus 10B acquires the control signals for starting and ending the driving of the tool 50 from the machine 70B, and the detector communication unit 22 acquires multiple detected information of the vibration from the detector 30B in synchronization with the acquisition of the control signals (step S11).

Steps S12 to S17 are similar to steps S2 to S7, and thus the description thereof will be omitted.

The processing unit 47 of the management processor 40 performs clustering on the multiple detected information included in the vibration data received in step S7 and step S17. Specifically, the processing unit 47 classifies the detected information into multiple clusters and assigns their cluster numbers to the clusters (step S22).

The storing and reading unit 49 stores, in the vibration data management DB 4001, the cluster numbers assigned in step S22, and the vibration data received in steps S7 and S17 in association with one another, to update the vibration data (step S23).

The processing unit 47 causes the storing and reading unit 49 to search the cluster management DB 4002 using the cluster number assigned in step S22 as a search key, to identify the cluster associated with the tag information containing "subject to notification." The display control unit 44 displays various kinds of information of the identified cluster subject to notification on the display 406a (step S24).

When instructed to rearrange the clusters classified in step S22 according to a predetermined priority criterion and to add tag information to the high-priority cluster, the processing unit 47 causes the storing and reading unit 49 to store the cluster number of the high-priority cluster and the tag information in association with one another in the cluster management DB 4002. The processing unit 47 performs, on the high-priority cluster, processing different from the processing for other clusters (step S25). The priority used in step S25 is different from the priority used in step S6 and is determined based on, for example, the product identifier or the component identifier. In other words, the priority criterion used in step S25 relates, for example, to the product identifier or the component identifier.

The processing described with reference to FIG. 6 may be executed by each of the diagnostic apparatuses 10A and 10B in a stand-alone manner except for the processing related to the transmission and reception and the processing performed by the management processor 40.

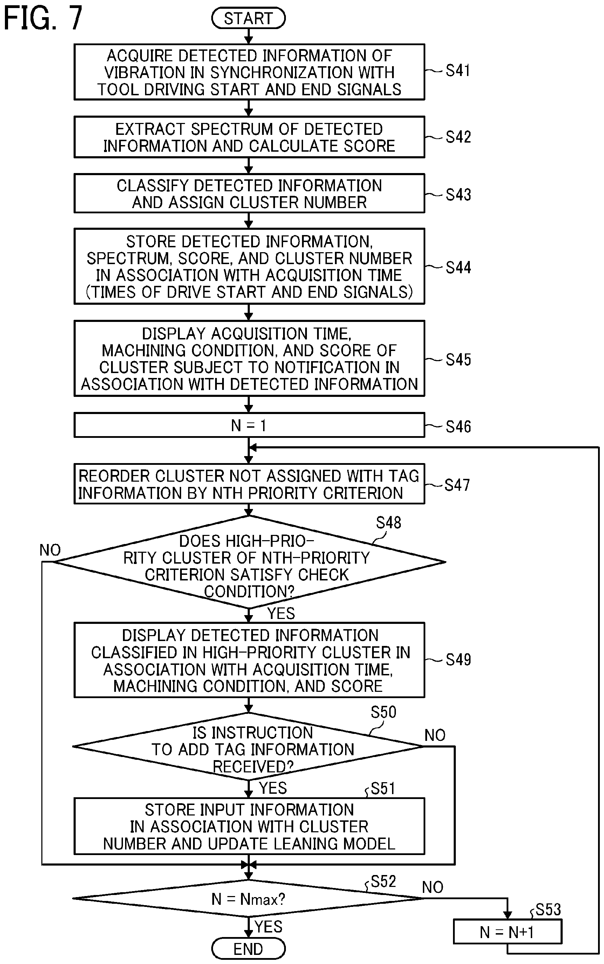

FIG. 7 is a flowchart of an operation performed by the diagnostic apparatus according to the present embodiment. FIG. 7 illustrates the operation corresponding to steps S1 to S6andS11 to S16 of FIG. 6.

The communication unit 21 of the diagnostic apparatus 10 acquires the control signals for starting and ending the driving of the tool 50 from the machine 70, and the detector communication unit 22 acquires multiple detected information of the vibration from the detector 30 in synchronization with the control signals (step S41).

The processing unit 17 extracts the spectra of the vibration waveforms from the detected information, and calculates the abnormality score based on the detected information using the learned model generated based on the learning data stored in the learning-data management DB 1003 (step S42).

The processing unit 17 classifies the multiple detected information acquired in step S41 into multiple clusters and assigns a cluster number to each of the multiple clusters (step S43).

The processing unit 17 classifies the multiple detected information into multiple clusters based on an algorithm for, for example, K-means clustering or a Gaussian mixture model. The processing unit 17 can classify the detected information into multiple clusters by converting the detected information into a spectrogram or an average spectrum, which may be further dimensionally compressed to feature values by a method such as principal component analysis. When the detected information acquired in step S41 is classified into an already-present cluster, the processing unit 17 assigns the cluster number of that cluster to the detected information.

The storing and reading unit 19 stores, in the vibration data management DB 1001, the detected information, the spectrum extracted in step S42, the abnormality score calculated in step S42, and the cluster number assigned in step S43 in association with the time of acquisition of the detected information in step S41, to update the vibration data (step S44).

At this time, the storing and reading unit 19 also stores the product identifier, the component identifier, and the machining condition information described with reference to FIG. 5A in the vibration data management DB 1001 in association with, for example, the detected information. The product identifier, the component identifier, and the machining condition information may be acquired by the communication unit 21 in addition to the detected information from the machine 70 in step S41, or may be acquired by the reception unit 13 receiving input from the user.

The processing unit 17 causes the storing and reading unit 19 to search the cluster management DB 1002 using the cluster number assigned in step S43 as a search key, to identify the cluster associated with the tag information containing "subject to notification." The display control unit 14 displays, on the display 106a, the time of acquisition, the machining condition, and the abnormality score in association with the detected information for the identified cluster subject to notification (step S45).

The processing unit 17 assigns 1 to a variable N representing priority-criterion identification information for individually identifying multiple priority criteria (step S46). The processing unit 17 then rearranges the multiple clusters classified in step S43 by the priority criterion represented by the Nth priority-criterion identification information (step S47). The step S47 is an example of distinguishing a high-priority cluster from among multiple clusters into which multiple data are classified.

As an example, when N is 1, the processing unit 17 rearranges the clusters according to a first priority criterion that the average value of the abnormality scores is high. When N is 2, the processing unit 17 rearranges the multiple clusters according to a second priority criterion that the average value of the abnormality score is low.

The determination unit 15 determines whether the high-priority cluster by the N-th priority criterion among the multiple clusters rearranged in step S47 satisfies the check condition (step S48), and proceeds to step S52 when the check condition is not satisfied.

The priority used in step S47 is determined with reference to the detected information, but the check condition used in step S48 is unrelated to the detected information or has low relevance.

Examples of the check condition include a condition that the frequency of occurrence of the high-priority cluster is equal to or higher than a threshold, a condition that the rate of change in the frequency of occurrence of the high-priority cluster is equal to or higher than a threshold, and a condition that, regarding the high-priority cluster, the frequency of occurrence before the detected information having an abnormality score equal to or higher than a threshold score is equal to or higher than a threshold.

When the check condition is satisfied in step S48, the display control unit 14 displays, on the display 106a, the detected information classified into the high-priority cluster in association with the time of acquisition, the machining condition, and the abnormality score (step S49). Step S49 is an example of displaying a high-priority cluster.

The high-priority cluster displayed in step S49 is not limited to the highest-priority cluster, and may be multiple high-priority clusters that satisfy the check condition of step S48.

The determination unit 15 determines whether the reception unit 13 has received an instruction operation for adding tag information to the high-priority cluster (step S50). When the instruction operation has not been received, the process proceeds to step S52. Step S50 is an example of receiving an instruction operation for adding, to the high-priority cluster, of distinguishing information for distinguishing a high-priority cluster from other clusters.

When the instruction operation is received in step S50, the processing unit 17 causes the storing and reading unit 19 to store the cluster number of the high-priority cluster and the tag information corresponding to the instruction operation received in step S50 in association with one another in the cluster management DB 1002. When the tag information includes "normal" or "abnormal," the processing unit 17 causes the storing and reading unit 19 to store the detected information included in the high-priority cluster in association with the spectrum and the tag information in the learning-data management DB 1003, to update the learned model (step S51). Step S51 is an example of adding, to the high-priority cluster, distinguishing information for distinguishing the high-priority cluster from the rest of the clusters.

The determination unit 15 determines whether the variable N representing the priority-criterion identification information has reached a maximum value Nmax (step S52). When the variable N has not reached the maximum value Nmax, the determination unit 15 increments the variable N by 1 (step S53) and returns to step S47 to continue the process. When the variable N has reached the maximum value Nmax, the determination unit 15 ends the process.

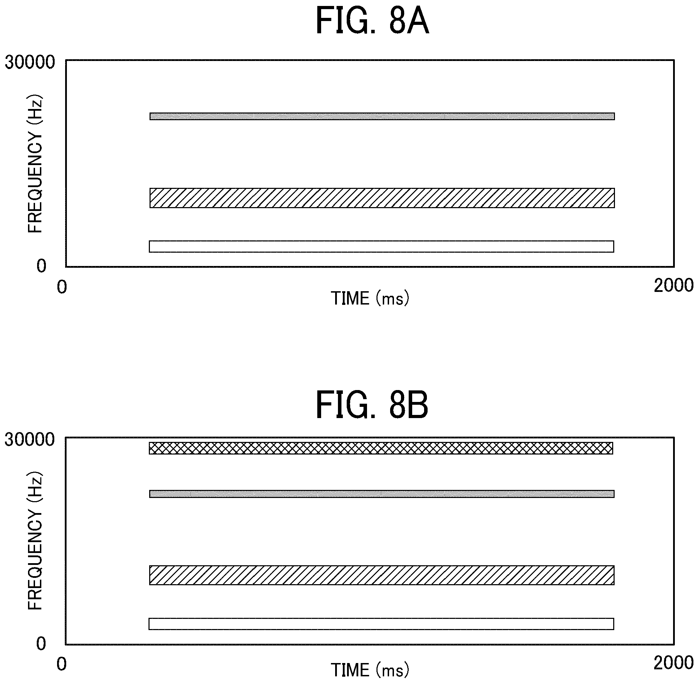

FIGS. 8A and 8B are diagrams each illustrating a spectrogram of detected information according to the present embodiment. FIG. 8A illustrates a spectrogram of a detection signal detected when the machining operation of the machine 70 is normal. FIG. 8B illustrates a spectrogram of a detection signal detected when the machining operation of the machine 70 has an abnormality.

As illustrated in FIG. 8B, when an abnormality occurs during the machining operation of the machine 70, the spectrogram includes a frequency component around 30,000 Hz.

When, for example, the spectrogram illustrated in FIG. 8B is stored in the learning-data management DB 1003 as learning data indicating an abnormality, the learned model generated based on the learning data is sensitive to frequency components around 30,000 Hz. The processing unit 17 calculates the likelihood that the spectrogram of the detected information is abnormal as the abnormality score.

Alternatively, the processing unit 17 may calculate the likelihood that the spectrogram of the detected information is normal using a learned model generated based on the learning data indicating a normal spectrogram, stored in the learning-data management DB 1003, and then calculate the reciprocal of the likelihood as the abnormality score.

The processing unit 17 may calculate the abnormality scores as stepwise ranks, as binary values of 0 and 1, or accumulate the calculated abnormality scores.

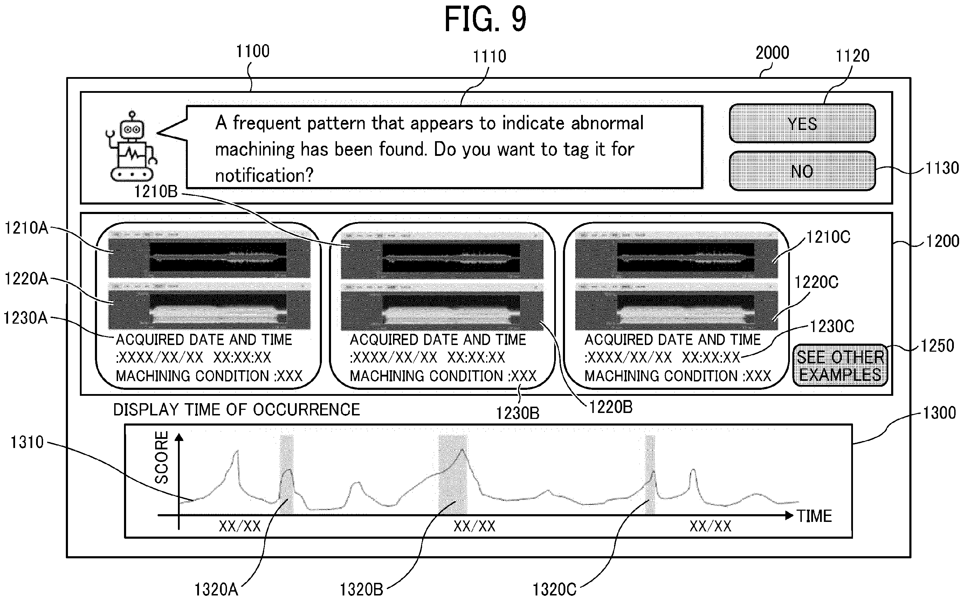

FIG. 9 is a diagram illustrating a display screen by the diagnostic apparatus 10 according to the present embodiment and illustrates a display screen 2000 displayed on the display 106a by the display control unit 14 in step S49 of FIG. 7.

The display control unit 14 displays, on the display screen 2000, a receiving section 1100, a vibration data section 1200, and an abnormality score section 1300.

The display control unit 14 displays a tag information proposal field 1110, a confirmation button 1120 labeled "OK," and a cancel button 1130 labeled "NO" in the receiving section 1100.

The display control unit 14 respectively displays, for multiple detected information A to C included in the high-priority cluster, vibration waveforms 1210A to 1210C, spectra 1220A to 1220C, and additional information 1230A to 1230C (such as the times of acquisition and the machining conditions) of the detected information A to C in the vibration data section 1200. The display control unit 14 further displays a detected information switching button 1250 in the vibration data section 1200.

The display control unit 14 displays time-series data 1310 of the abnormality score in the abnormality score section 1300 and superimposes respective periods 1320A to 1320C of the occurrences of the detected information A to C on the time-series data 1310 of the abnormality score.

When the detected information switching button 1250 is operated in the state illustrated in FIG. 9, the reception unit 13 receives an instruction operation for switching the detected information displayed on the vibration data section 1200. The display control unit 14 displays a vibration waveform 1210, a spectrum 1220, and additional information 1230 of the detected information other than the detected information A to C included in the high-priority cluster.

In FIG. 9, the tag information proposal field 1110 displays a proposal to add "abnormal" as the tag information. When the operation of the confirmation button 1120 is input in this state, the reception unit 13 receives an instruction operation for adding the tag information "abnormal" to the high-priority cluster.

By contrast, when the operation of the cancel button 1130 is input, the reception unit 13 does not receive the instruction operation for adding the tag information "abnormal" to the high-priority cluster.

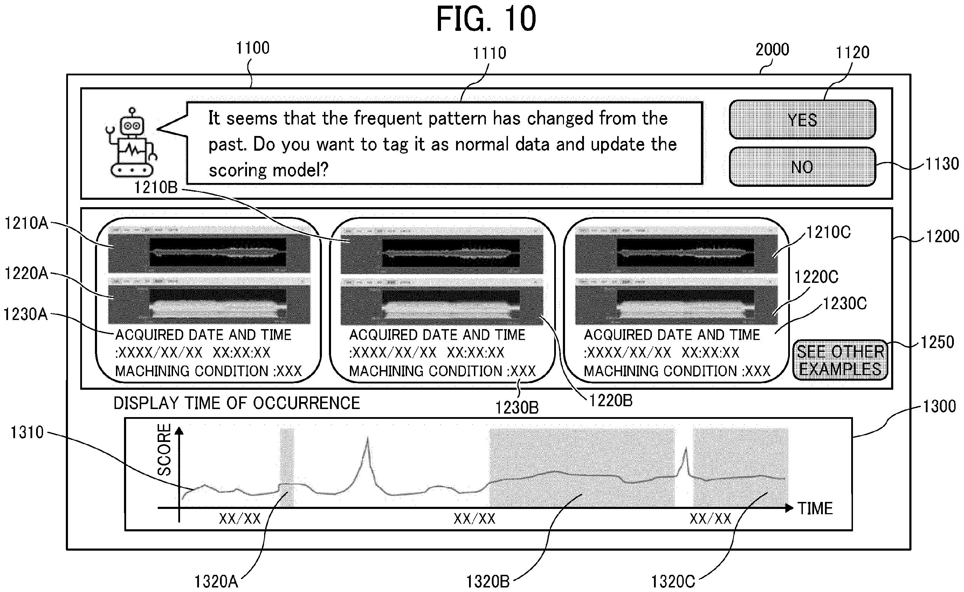

FIG. 10 is a diagram illustrating another display screen by the diagnostic apparatus 10 according to the present embodiment.

In the display screen illustrated in FIG. 10, the tag information proposal field 1110 includes a proposal to add "normal" as the tag information. When the operation of the confirmation button 1120 is input in this state, the reception unit 13 receives an instruction operation for adding the tag information "normal" to the high-priority cluster.

By contrast, when the operation of the cancel button 1130 is input, the reception unit 13 does not receive the instruction operation for adding the tag information "normal" to the high-priority cluster.

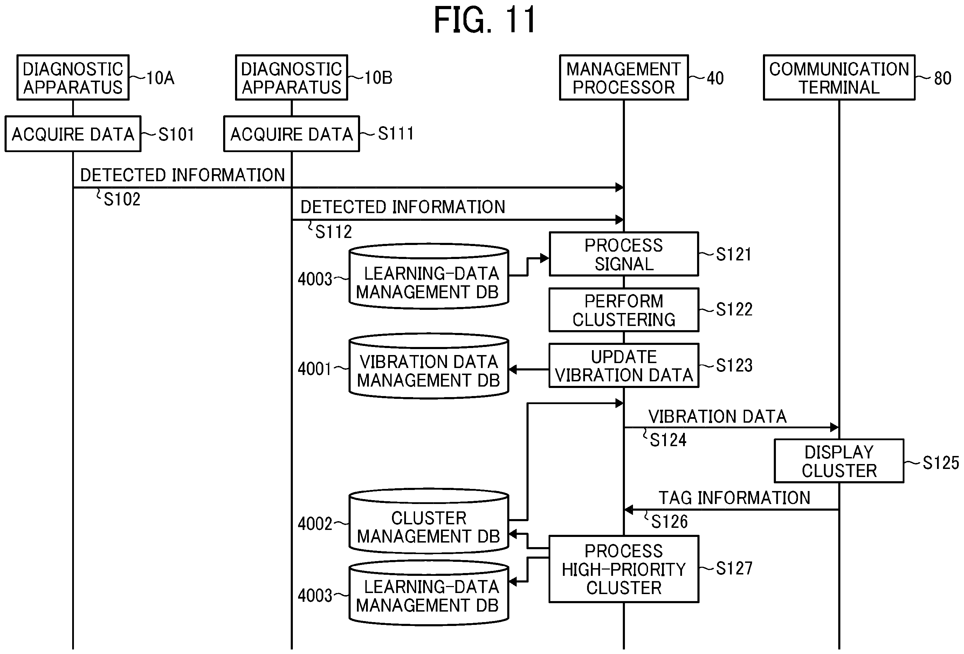

FIG. 11 is a sequence diagram of an operation according to a modification of the above-described embodiment of the present disclosure.

The communication unit 21 of the diagnostic apparatus 10A acquires the control signals for starting and ending the driving of the tool 50 from the machine 70A. The detector communication unit 22 acquires multiple detected information of the vibration from the detector 30A in synchronization with the acquisition of the control signals (step S101).

The transmission and reception unit 11 transmits vibration data including the detected information acquired in step S101 to the management processor 40. The transmission and reception unit 41 of the management processor 40 receives the vibration data transmitted by the transmission and reception unit 11 (step S 102).

The communication unit 21 of the diagnostic apparatus 10B acquires the control signals for starting and ending the driving of the tool 50 from the machine 70B. The detector communication unit 22 acquires multiple detected information of the vibration from the detector 30B in synchronization with the acquisition of the control signals (step S111). Step S112 is similar to step S102.

The processing unit 47 of the management processor 40 extracts the spectra of the vibration waveforms from the detected information included in the vibration data received in steps S102 and S112, and calculates the abnormality score based on the detected information using the learned model generated based on the learning data stored in the learning-data management DB 4003 (step S121).

The processing unit 47 performs the clustering of the multiple detected information included in the vibration data received in steps S102 and S 112. Specifically, the processing unit 17 classifies the detected information into multiple clusters and assigns their cluster numbers to the clusters (step S 122).

The storing and reading unit 49 stores, in the vibration data management DB 4001, the cluster numbers assigned in step S122, and the vibration data received in steps S102 and S 112 in association with one another, to update the vibration data (step S123).

The processing unit 47 causes the storing and reading unit 49 to search the cluster management DB 4002 using the cluster number assigned in step S 122 as a search key, to identify the cluster associated with the tag information containing "subject to notification." Further, processing unit 47 rearranges the clusters classified in step S122 according to the predetermined priority criterion.

The transmission and reception unit 41 transmits the vibration data (cluster information) of the cluster subject to notification and the high-priority cluster to the communication terminal 80. The transmission and reception unit 81 of the communication terminal 80 receives the vibration data of the specified cluster subject to notification transmitted from the management processor 40 (step S124). Step S124 is an example of transmitting cluster information being information on the high-priority cluster to the communication terminal 80.

The display control unit 84 of the communication terminal 80 displays, on the display, various kinds of information included in the vibration data of the specified cluster subject to notification. The display control unit 14 further displays, on the display, the detected information classified into the high-priority cluster in association with the time of acquisition, the machining condition, and the abnormality score (step S 125).

When the reception unit 83 receives an instruction operation for adding the tag information to the high-priority cluster, the transmission and reception unit 81 transmits the tag information corresponding to the received instruction operation to the management processor 40. Then, the transmission and reception unit 41 of the management processor 40 receives the tag information transmitted from the communication terminal 80 (step S126). Step S126 is an example of receiving, from a communication terminal, distinguishing information for distinguishing a high-priority cluster from other clusters.

The processing unit 47 of the management processor 40 stores the cluster number of the high-priority cluster and the tag information in association with one another in the cluster management DB4002, and performs, on the high-priority cluster, processing different from the processing for other clusters (step S 127).

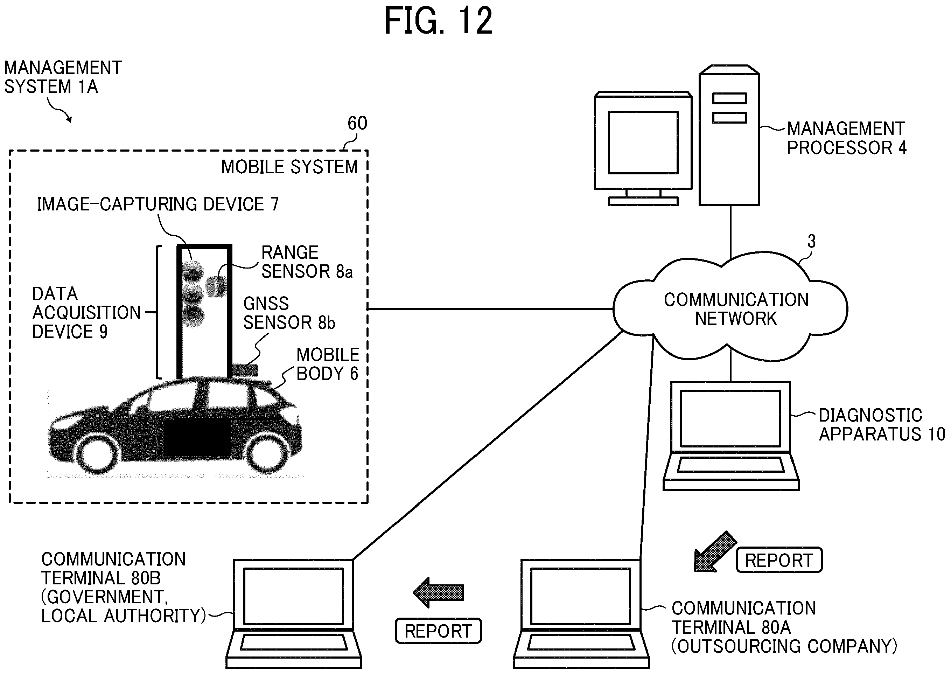

FIG. 12 is a diagram illustrating an overall configuration of a management system according to a modification of the above-described embodiment of the present disclosure. FIG. 12 illustrates a management system 1A as an example of the information processing system to which aspects of the present disclosure are applied. The management system 1A inspects a road earth structure using various data acquired by a mobile system 60. The term "road earthwork structure" is a generic name for structures whose principal materials are ground materials such as mud, sand, stones, and rocks used for roads, and also refers to structures associated with such structures whose principal materials are ground materials. Examples of road earthwork structures include cut and slope stabilization facilities, embankments, and culverts. In the following description, a road earthwork structure may be referred to as a slope.

The management system 1A includes a mobile system 60, the diagnostic apparatus 10, a management processor 4, a communication terminal 80A used by an outsourcing company, and a communication terminal 80A used by a national government or local authority. The mobile system 60 includes a data acquisition device 9 and a mobile body 6, such as a vehicle, on which the data acquisition device 9 is mounted. The data acquisition device 9 includes an image-capturing device 7, a range sensor 8a, and a global navigation satellite system (GNSS) sensor 8b. The image-capturing device 7 is a measuring device for measuring a structure. The term "GNSS" is a generic name for navigation satellite systems satellite position measuring systems such as a global positioning system (GPS) and quasi-zenith satellite system (QZSS).

The image-capturing device 7 is a line camera including a line sensor in which photoelectric conversion elements are arranged in one or more rows. The image-capturing device 7 photographs (captures an image of) a position in a predetermined image-capturing range on an image-capturing surface in the direction of traveling of the mobile body 6. The image-capturing device is not limited to a line camera and may be, for example, a camera including an area sensor in which photoelectric conversion elements are arranged in a plane. The image-capturing device may be implemented by multiple cameras. The image-capturing device 7 is an example of a measurement device and acquires a captured image which is an example of measurement data acquired by the measurement device.

The range sensor 8a is a time-of-flight (ToF) sensor. The range sensor 8a measures the distance from a subject photographed by the image-capturing device 7. The GNSS sensor 8b is a position measuring means for measuring a position on the earth by receiving signals transmitted from multiple GNSS satellites at multiple times and calculating the distances to the satellites based on the differences between the times of transmission of the signals to the times of receival of the signals. The position measuring means may be a device dedicated to position measuring or an application dedicated to position measuring, installed in, for example, a PC or a smartphone. The range sensor 8a and the GNSS sensor 8b are examples of a sensor device. The range sensor 8 is an example of a three-dimensional sensor and a measurement device, and acquires three-dimensional data which is an example of measurement data acquired by the measurement device.

The ToF sensor used as the range sensor 8a emits laser light to a subject from a light source and measures the light scattered by or reflected from the subject, to measure the distance from the light source to the subject.

In the present embodiment, the range sensor 8a is a light detection and ranging (LIDAR) sensor. The LIDAR is a technology to measure light flight time using pulses. Alternatively, as another method of the ToF sensor, the distance may be measured using a phase difference detection method. In the phase difference detection method, laser light having an amplitude modulated at a fundamental frequency is emitted to an area to be measured and the light reflected from the area to be measured is received, to measure the phase difference between the emitted light and the reflected light. By doing so, the time is obtained, and the time is multiplied by the speed of light, to obtain the distance. Alternatively, the range sensor 8a may be implemented by, for example, a stereo camera.

By using the three-dimensional sensor, the mobile system 60 can obtain three-dimensional information such as the height, inclination angle, or swelling of a slope. Such three-dimensional information is difficult to obtain from a two-dimensional image.

The mobile system 60 may further include an angle sensor. The angle sensor 8c is, for example, a gyro sensor to detect an angle (posture) or angular velocity (or each acceleration) of the image capturing direction of the image-capturing device 7.

The diagnostic apparatus 10 and the management processor 4 communicate with the mobile system 60, the communication terminal 80A, and the communication terminal 80B via the communication network 3. The communication network 3 includes, for example, the Internet, a mobile communication network, and a local area network (LAN). The communication network 3 may include, in addition to wired communication networks, wireless communication networks in compliance with, for example, 3rd generation (3G), 4th generation (4G), 5th generation (5G), Wireless Fidelity (WI-FI), Worldwide Interoperability for Microwave Access (WiMAX) or Long-Term Evolution (LTE).

Further, the diagnostic apparatus 10 and the management processor 4 may each have a communication function using a short-range communication technology such as near field communication (NFC).

The management processor 4 is an example of an information processing apparatus. The management processor 4 is a computer (e.g., a PC) that manages various kinds of data acquired by the data acquisition device 9. The management processor 4 receives various kinds of data from the data acquisition device 9 and transfers the received data to the diagnostic apparatus 10 that analyzes the data. The transfer of the various kinds of data from the management processor 4 to the diagnostic apparatus 10 may be performed manually, for example, using a universal serial bus (USB) memory.

The diagnostic apparatus 10 is a computer such as a PC that evaluates the condition of a slope based on the various kinds of data transferred from the management processor 4. The diagnostic apparatus 10A is installed with an application program dedicated to the evaluation of the condition of the slope. The diagnostic apparatus 10 detects the type or structure of the slope based on captured image data and sensor data and extracts shape data. The diagnostic apparatus 10 further performs detailed analysis such as detection of a deformation and the degree of the deformation. The diagnostic apparatus 10 generates a report to be submitted to an entity that manages roads, using the captured image data, the sensor data, evaluation target data, and the detailed analysis result. The entity is, for example, a national government, a local authority, or an outsourcing company. The data of the report generated by the diagnostic apparatus 10 is submitted to the national government or the local authority via the outsourcing company as electronic data or printed documents. The report generated by the diagnostic apparatus 10 is referred to as, for example, a survey record sheet, a checklist, a survey profile, or records. The diagnostic apparatus 10 is not limited to a PC but may be, for example, a smartphone or a tablet communication terminal.

The communication terminal 80A is owned by the outsourcing company. The communication terminal 80B is owned by the national government or the local authority. The communication terminals 80A and 80B communicate with the management processor 4, and various data managed by the management processor 4 can be viewed on the communication terminals 80A and 80B.

The diagnostic apparatus 10, the management processor 4, and the communication terminals 80A and 80B according to the present modification can be similar to those of the diagnostic apparatus 10A, the management processor 40, and the communication terminal 80 illustrated in FIG. 4, respectively.

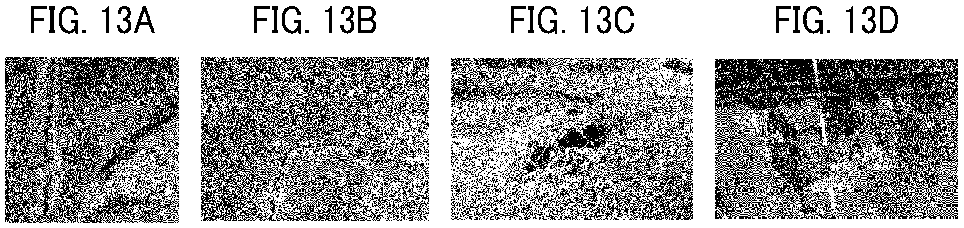

FIGS. 13A to 13D are diagrams each illustrating a captured image acquired by the image-capturing device 7 of the management system 1A illustrated in FIG. 12, according to the modification of the above-described embodiment.

To the high-priority cluster including the captured image as illustrated in FIG. 13A, a user operation for adding, for example, tag information "small crack" is received. The instruction operation may be received by, for example, the reception unit 13 of the diagnostic apparatus 10 similar to step S50 described above.

To the high-priority cluster including the captured image as illustrated in FIG. 13B, a user operation instructing the addition of, for example, tag information "large crack" is received.

To the high-priority cluster including the captured image as illustrated in FIG. 13C, a user operation instructing the addition of, for example, tag information "wire netting exposure" is received.

To the high-priority cluster including the captured image as illustrated in FIG. 13D, a user operation instructing the addition of, for example, tag information "peeling" is received.

The present disclosure has the following aspects.

### First Aspect

As described above, the diagnostic apparatus 10 and the management processor 40 each of which is an information processing apparatus according to an embodiment of the present disclosure respectively include the processing units 17 and 47 that classify, into multiple clusters, multiple detected information representing detected vibrations that change with an operation of the tool 50 of the machine 70, and distinguish a high-priority cluster having a high priority among the multiple clusters based on a predetermined priority criterion; the display control units 14 and 44 that display the high-priority cluster respectively on the displays 106a and 406a as examples of the display; and the reception units 13 and 43 that receive an instruction operation using the confirmation button 1120, for adding tag information to the high-priority cluster. The tag information is an example of distinguishing information for distinguishing the high-priority cluster from other clusters. The processing units 17 and 47 add the tag information to the high-priority cluster.

The detected information representing the detected vibration that changes with the operation of the tool 50 of the machine 70 is an example of data.

In real-world operations, not all clusters are used in the subsequent process. For example, when abnormality is determined in the subsequent process based on the clusters, the clusters desired to be used in the subsequent process are a cluster corresponding to model processing useful as a reference for determining the degree of abnormality and a cluster corresponding to abnormal phenomena desired to be detected in the subsequent process. The tag information is to be added to such clusters.

In the above-described embodiments, the processing units 17 and 47 distinguish, for example, such a cluster that may be used in the subsequent process as the high-priority cluster among the multiple clusters. This enables the user to add the distinguishing information to the high-priority cluster. This configuration enables the user to efficiently add the tag information to the high-priority cluster, as compared with adding the tag information to all clusters.

### Second Aspect

In the information processing apparatus according to the first aspect, the processing units 17 and 47 perform, on the high-priority cluster to which the tag information is added, processing different from the processing for other clusters.

As a result, the processing different from that for other clusters can be performed on the high-priority cluster to which the tag information is efficiently added.

### Third Aspect

In the information processing apparatus according to the second aspect, the processing units 17 and 47 respectively store, in the learning-data management DBs 1003 and 4003, the high-priority cluster to which the tag information is added, as learning data for generating a learned model.

As a result, the high-priority cluster to which the tag information is efficiently added can be stored as learning data for generating a learned model.

### Fourth Aspect

In the information processing apparatus according to any one of the first aspect to the third aspect, the data is measurement data obtained by measuring a subject, and the priority is determined based on likelihood information indicating likelihood of abnormality of the subject determined based on the measurement data.

This configuration enables the user to efficiently add tag information to a cluster having high or low likelihood of abnormality of the subject.

### Fifth Aspect

In the information processing apparatus according to any one of the first to third aspects, the predetermined priority criterion includes a first priority criterion and a second priority criterion, and the processing units 17 and 47 distinguish a first high-priority cluster having high priority based on the first priority criterion and a second high-priority cluster having high priority based on the second priority criterion from among the multiple clusters. The display control units 14 and 44 respectively display, on the displays 106a and 406a, the first high-priority cluster based on the first priority criterion and the second high-priority cluster based on the second priority criterion. The reception units 13 and 43 receive a first instruction operation for adding, to the first high-priority cluster based on the first priority criterion, first tag information for distinguishing the first high-priority cluster from other clusters, and a second instruction operation for adding, to the second high-priority cluster based on the second priority criterion, second tag information for distinguishing the second high-priority cluster from other clusters. The processing units 17 and 47 add the first tag information to the first high-priority cluster based on the first priority criterion and add the second tag information to the second high-priority cluster based on the second priority criterion.

This configuration enables the user to efficiently add the tag information to the high-priority cluster based on the first priority criterion and the high-priority cluster based on the second priority criterion, as compared with adding tag information to all the clusters.

### Sixth Aspect

In the information processing apparatus according to the fifth aspect, the first priority criterion indicates that likelihood of abnormality of the subject determined based on the measurement data is high, and the second priority criterion indicates that the likelihood of abnormality of the subject determined based on the measurement data is low.

This configuration enables the user to efficiently add tag information to a cluster having high likelihood of abnormality of the subject and a cluster having low likelihood of abnormality of the subject.

### Seventh Aspect

The management processor 40 as the information processing apparatus according to an embodiment of the present disclosure includes the processing unit 47 and the transmission and reception unit 41. The processing unit 47 classifies, into multiple clusters, multiple measurement data obtained by measuring a subject, and distinguishes a high-priority cluster having a high priority among the multiple clusters based on a predetermined priority criterion. The transmission and reception unit 41 transmits, to the communication terminal 80, cluster information being information on the high-priority cluster, and receives, from the communication terminal 80, tag information for distinguishing the high-priority cluster from other clusters. The processing unit 47 adds the tag information to the high-priority cluster.

This configuration enables the user to efficiently add the tag information to the high-priority cluster, as compared with a configuration in which an external device adds the tag information to all the clusters.

### Eighth aspect

An information processing method executed by the diagnostic apparatus 10 or the management processor 40 according to an embodiment of the present disclosure includes classifying, into multiple clusters, multiple measurement data obtained by measuring a subject; distinguishing, based on a predetermined priority criterion, a high-priority cluster having a high priority among the multiple clusters; displaying, on a display, the high-priority cluster; receiving an instruction operation for adding, to the high-priority cluster, tag information for distinguishing the high-priority cluster from other clusters; and adding the tag information to the high-priority cluster.

### Ninth Aspect

An information processing method executed by the diagnostic apparatus 10 or the management processor 40 according to an embodiment of the present disclosure includes classifying, into multiple clusters, multiple measurement data obtained by measuring a subject; distinguishing, based on a predetermined priority criterion, a high-priority cluster having a high priority among the multiple clusters; transmitting cluster information being information on the high-priority cluster to the communication terminal 80; receiving, from the communication terminal 80, tag information for distinguishing the high-priority cluster from other clusters; and adding the tag information to the high-priority cluster.

### Tenth Aspect

A program according to an embodiment of the present disclosure causes a computer to execute the information processing method according to the eighth aspect or the ninth aspect.

### Eleventh Aspect

The management system 1 as an information processing system according to an embodiment of the present disclosure includes the management processor 40 and the communication terminal 80 that communicates with the management processor 40. the management processor 40 includes the processing unit 47 and the transmission and reception unit 41. The processing unit 47 classifies, into multiple clusters, multiple measurement data obtained by measuring a subject, and distinguishes a high-priority cluster having a high priority among the multiple clusters based on a predetermined priority criterion. The transmission and reception unit 41 transmits, to the communication terminal 80, cluster information being information on the high-priority cluster, and receives, from the communication terminal 80, tag information for distinguishing the high-priority cluster from other clusters. The processing unit 47 adds the tag information to the high-priority cluster. The communication terminal 80 includes the transmission and reception unit 81 that receives the cluster information from the management processor 40, the display control unit 84 that displays, on a display, the high-priority cluster; and the reception unit 83 that receives an instruction operation for adding, to the high-priority cluster, the tag information for distinguishing the high-priority cluster from other clusters. The transmission and reception unit 81 transmits the tag information to the management processor 40.

In another aspect, an information processing apparatus includes a processing means for distinguishing, based on a predetermined priority criterion, a high-priority cluster among multiple clusters into which multiple data are classified; a transmission means for transmitting, to a communication terminal, cluster information being information on the high-priority cluster; and a reception means for receiving distinguishing information for distinguishing the high-priority cluster from other clusters.

The processing means adds the distinguishing information to the high-priority cluster.

In yet another aspect, a method for processing information by an information processing apparatus includes distinguishing, based on a predetermined priority criterion, a high-priority cluster among multiple clusters into which multiple data are classified; transmitting cluster information being information on the high-priority cluster to a communication terminal; receiving, from the communication terminal, distinguishing information for distinguishing the high-priority cluster from other clusters; and adding the distinguishing information to the high-priority cluster.

Any one of the above-described operations may be performed in various other ways, for example, in an order different from the one described above.

The present invention can be implemented in any convenient form within the scope of the appended claims, for example using dedicated hardware, or a mixture of dedicated hardware and software. The present invention may be implemented as computer software implemented by one or more networked processing apparatuses. The processing apparatuses include any suitably programmed apparatuses such as a general-purpose computer, a personal digital assistant, a Wireless Application Protocol (WAP) or third generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid-state memory device.

## Claims

1. An information processing system comprising:
a processing means (17; 47) for distinguishing, based on a predetermined priority criterion, a high-priority cluster having a high priority among multiple clusters into which multiple data are classified;
a display control means (14; 44; 84) for displaying the high-priority cluster on a display; and
an operation reception means (13; 43; 83) for receiving an instruction operation for adding, to the high-priority cluster, distinguishing information for distinguishing the high-priority cluster from a rest of the multiple clusters,
wherein the processing means (17; 47) is configured to add the distinguishing information to the high-priority cluster.

2. The information processing system according to claim 1,
wherein the processing means (17; 47) is configured to perform, on the high-priority cluster to which the distinguishing information is added, processing different from processing performed on the rest of the multiple clusters.

3. The information processing system according to claim 2,
wherein the processing means (17; 47) is configured to store, in a storage means, the high-priority cluster to which the distinguishing information is added as learning data.

4. The information processing system according to any one of claims 1 to 3,
wherein the multiple data include multiple measurement data obtained by measuring a subject, and
wherein the priority is determined based on likelihood information indicating likelihood of abnormality of the subject determined based on the multiple measurement data.

5. The information processing system according to any one of claims 1 to 3,
wherein the predetermined priority criterion includes multiple criteria including a first priority criterion and a second priority criterion, and the distinguishing information includes first distinguishing information for distinguishing a first high-priority cluster having a high priority based on the first priority criterion, and second distinguishing information for distinguishing a second high-priority cluster having a high priority based on the second priority criterion, and
wherein the processing means (17; 47) is configured to distinguish the first high-priority cluster and the second high-priority cluster from among the multiple clusters,
wherein the display control means (14; 44; 84) is configured to display, on the display, the first high-priority cluster and the second high-priority cluster,
wherein the operation reception means (13; 43; 83) is configured to receive a first instruction operation for adding the first distinguishing information to the first high-priority cluster, and a second instruction operation for adding the second distinguishing information to the second high-priority cluster, and
wherein the processing means (17; 47) is configured to add the first distinguishing information to the first high-priority cluster and add the second distinguishing information to the second high-priority cluster.

6. The information processing system according to claim 5,
wherein the multiple data include multiple measurement data obtained by measuring a subject,
wherein the first priority criterion indicates that likelihood of abnormality of the subject determined based on the multiple measurement data is high, and
wherein the second priority criterion indicates that the likelihood of abnormality of the subject determined based on the multiple measurement data is low.

7. The information processing system according to any one of claims 1 to 6, comprising
an information processing apparatus (10; 40) including the processing means (17; 47), the display control means (14; 44; 84), and the operation reception means (13; 43; 83);
a machine (70) including a tool (50) configured to perform processing on a subject; and
a detector (30) including:
a data acquisition means (32) configured to detect vibrations that change with operation of the tool (50); and
a transmission means (71) configured to transmit, to the information processing apparatus (10; 40), multiple information representing the vibrations as the multiple data.

8. The information processing system according to claim 1, comprising:
an information processing apparatus (10; 40); and
a communication terminal (80),
wherein the information processing apparatus (10; 40) includes:
the processing means (17; 47);
a first transmission means (11; 41) for transmitting, via a network to the communication terminal, cluster information being information on the high-priority cluster; and
a first reception means (11; 41) for receiving, via the network from the communication terminal, the distinguishing information for distinguishing the high-priority cluster from the rest of the multiple clusters, and
wherein the communication terminal includes:
a second reception means (81) for receiving the cluster information via the network from the information processing apparatus;
the display control means (84);
the operation reception means (3); and
a second transmission means (81) for transmitting the distinguishing information via the network to the information processing apparatus.

9. A method for processing information by an information processing apparatus, the method comprising:
distinguishing (S47), based on a predetermined priority criterion, a high-priority cluster having a high priority among multiple clusters into which multiple data are classified;
displaying (S49) the high-priority cluster on a display;
receiving (S50) an instruction operation for adding, to the high-priority cluster, distinguishing information for distinguishing the high-priority cluster from a rest of the multiple clusters; and
adding (S51) the distinguishing information to the high-priority cluster.

10. A carrier medium carrying computer readable codes which, when executed by a computer system, cause the computer system to carry out the method according to claim 9.
